# EUROPEAN PATENT APPLICATION

(11) **EP 4 397 219 A1**
(43) Date of publication of application: **10.07.2024**
(21) Application number: 23214155.6
(22) Date of filing: 05.12.2023
(51) Int. Cl.: A47J 43/14

(54) **AUTOMATIC EGG FRYING MACHINE**

(30) Priority: 05.01.2023 CN 202310011226
(71) Applicant: Dongguan Yuwei Food Machinery Technology Co., Ltd, Dongguan City, Guangdong Province (CN)
(72) Inventor: ZHOU, Yujian, Shaoyang (CN)
(74) Representative: Zaboliene, Reda

(57) **Abstract**

The present disclosure provides an automatic egg frying machine. The automatic egg frying machine includes a machine frame, where an egg placing device, an egg delivery device, a moving assembly, an egg opening device, a cooking device and a rotary receiving plate device are arranged in the machine frame. The cooking device at least includes a frying pan, the egg opening device includes an egg supporting portion, a trigger portion and an egg knife, and the trigger portion includes egg receiving position a, egg cracking position b, egg opening position c and shell dropping position e. The moving device is arranged on one side of the egg opening device, and the egg opening device completes the actions of egg receiving, egg cracking from a side surface, egg opening and shell dropping in one direction by means of the moving device, such that hands are freed in a cooking process of the automatic egg frying machine, and working efficiency is improved. The structure is simple, and assembly is convenient. Moreover, the whole machine has a small size, such that carrying is convenient, and time and labor are saved.

## Description

### TECHNICAL FIELD

The present disclosure belongs to the technical field of egg frying machines, and particularly relates to an automatic egg frying machine.

### BACKGROUND

Fried eggs have always been popular with people because of the good taste, rich nutrition and affordable price. In many catering places such as school canteens, there is a huge demand for the fried eggs. In the prior art, eggs are automatically transported to be opened by means of automatic egg frying machines, and the eggs are made into fried eggs to meet the demand. Shell cracking of the eggs is completed by means of an egg opening module, which is a very important link in the egg frying process. An existing egg frying machine has the following problems:
For example, in the patent No. CN202010812196.X, in order to achieve the actions of egg receiving, egg cracking, egg opening and shell dropping, an egg opening mechanism is provided with an egg opening assembly and a shell dropping assembly to achieve the actions of egg opening and shell dropping, and the design and structure of the egg opening mechanism are relatively complex, the assembly is complicated, a relatively large space of a rack is occupied, the manufacturing cost is high, and the working efficiency of the whole egg frying process is low.

### SUMMARY

### (1) Technical problems to be solved

In view of the defects of the prior art, an objective of the present disclosure is to provide a full-process automatic egg frying machine, where an egg opening device can achieve the four actions of egg receiving, egg cracking from a side surface, egg opening and shell dropping of eggs in sequence in one direction by means of a moving assembly, manual intervention is not needed in the whole process including egg transportation, egg receiving, egg cracking from a side surface, egg opening and shell dropping, and cooking, and therefore, working efficiency is improved.

### (2) Technical solutions

In order to solve the above technical problems, the present disclosure provides an automatic egg frying machine. The automatic egg frying machine includes a machine frame, and an egg opening device and a cooking device are arranged in the machine frame. The cooking device at least includes a frying pan, the egg opening device includes an egg supporting portion, a trigger portion and an egg knife, and the trigger portion includes egg receiving position a, egg cracking position b, egg opening position c and shell dropping position e. A moving device is arranged on one side of the egg opening device, and the egg opening device completes the actions of egg receiving, egg cracking from a side surface, egg opening and shell dropping in one direction by means of the moving device.

### (3) Beneficial effects

Compared with the prior art, the present disclosure has the beneficial effects as follows:
1. According to the automatic egg frying machine provided by the present disclosure, manual control over each action is reduced as much as possible, and pure mechanical actions are employed as much as possible, such that the egg frying machine is more durable. In the automatic frying process from eggs to fried eggs, stop of the egg frying machine caused by misoperation is avoided. The automatic egg frying machine has the characteristics of simple operation, convenient use, etc., which shortens cooking time and improves production efficiency. The eggs only need to be manually put into the egg placing device in turn, and then the fried eggs on a rotary receiving plate device are taken away, such that hands are freed in the cooking process, thereby greatly improving efficiency.
2. The automatic egg frying machine is designed to be small, has a simple and rational structure, and is convenient to assemble. The whole machine occupies a small space, is convenient to carry, and is time-saving and labor-saving.
3. The machine frame is provided with a shell receiving chute, an egg outlet, a cleaning port and the rotary receiving plate device, such that eggshells can fall onto the shell receiving chute, and the frying condition of the fried eggs can be observed from the egg outlet, such that the fried eggs can be effectively prevented from being burnt in a cooking process, nutrition loss is avoided, taste and nutritional value of the fried eggs are improved, the appearance is more beautiful, and the appetite of people for the fried eggs is stimulated. The rotary receiving plate device can be arranged to rotate at a certain angle to achieve egg receiving in a circular array, thereby avoiding frequent manual egg taking, increasing the number of the fried eggs received, and prolonging time intervals for manual egg taking. The cooking device can be cleaned directly from the cleaning port, such that operation is simple, convenient and fast.

### BRIEF DESCRIPTION OF THE DRAWINGS

FIG. 1 is three-dimensional structural diagram I of an egg frying machine of the present disclosure.
FIG. 2 is three-dimensional structural diagram II of an egg frying machine of the present disclosure.
FIG. 3 is a top view of an egg frying machine of the present disclosure.
FIG. 4 is a schematic diagram of a three-dimensional structure of an egg delivery device and swing of a swing plate under triggering action of an egg rotating rod of the present disclosure.
FIG. 5 is a three-dimensional structural diagram of an egg supporting portion and an egg knife of the present disclosure.
FIG. 6 is a three-dimensional structural diagram of a trigger portion of the present disclosure.
FIG. 7 is a three-dimensional structural diagram of an egg opening device of the present disclosure.
FIG. 8 is a schematic diagram when an egg knife is at egg receiving position a of a trigger portion of the present disclosure.
FIG. 9 is a schematic diagram when an egg supporting portion is at egg receiving position a of a trigger portion of the present disclosure.
FIG. 10 is a schematic diagram when an egg knife is at egg cracking position b of the present disclosure.
FIG. 11 is a schematic diagram when an egg supporting portion is at egg opening position c of the present disclosure.
FIG. 12 is a schematic diagram when an egg knife is at knife resetting position d of the present disclosure.
FIG. 13 is a schematic diagram when an egg supporting portion is at shell dropping position e of the present disclosure.
FIG. 14 is three-dimensional structural diagram I of a cooking device and an egg shoveling device of the present disclosure.
FIG. 15 is three-dimensional structural diagram II of a cooking device and an egg shoveling device of the present disclosure.
FIG. 16 is schematic diagram I of a moving process of roller IV on an upper end surface of an elastic sheet of the present disclosure.
FIG. 17 is schematic diagram II of a moving process of roller IV on a lower end surface of an elastic sheet of the present disclosure.
FIG. 18 is a three-dimensional diagram of an oil blocking portion, an egg shoveling device and a cooking device of the present disclosure.
FIG. 19 is a three-dimensional structural diagram of an oil blocking portion of the present disclosure.

Reference numerals in the figures are as follows: 1-machine frame; 2-egg placing device; 21-egg placing port; 22-swing plate; 3-egg delivery device; 31-conveyor belt; 32-egg rotating rod; 33-driving wheel; 34-swing plate trigger portion; 4-moving assembly; 41-driving member; 42-sliding rod; 43-sliding block; 5-egg shoveling device; 51-moving block; 52-upper spatula; 521-roller IV; 53-lower spatula; 54-lifting device I; 541-position-avoiding plate; 542-elastic sheet; 543-position-avoiding groove; 544-notch I; 545-notch II; 546-swing arm; 547-position-avoiding inclined plane; 548-guide surface; 55-lifting device II; 56-driving air cylinder; 57-spring I; 58-spring II; 6-egg opening device; 61-egg supporting portion; 611-egg holder; 612-double-rod push rod; 613-roller I; 62-trigger portion; 63-egg knife; 631-L-shaped support; 632-buckle; 633-clamping groove; 634-roller II; 635-roller III; 64-spring III; 65-spring IV; 7-cooking device; 71-upper frying pan; 711-outlet I; 72-lower frying pan; 721-outlet II; 73-heating pipe; 74-fixing plate; 741-strip hole I; 742-strip hole II; 743-oil draining groove; 744-chute; 8-oil blocking portion; 81-baffle plate; 811-protrusion; 82-oil receiving groove; 83-range hood; 100-shell receiving chute; 200-egg outlet; 300-cleaning port; and 400- rotary receiving plate device.

### DETAILED DESCRIPTION OF EMBODIMENTS

The technical solutions in the examples of the present disclosure will be clearly and completely described below with reference to the accompanying drawings in the examples of the present disclosure.

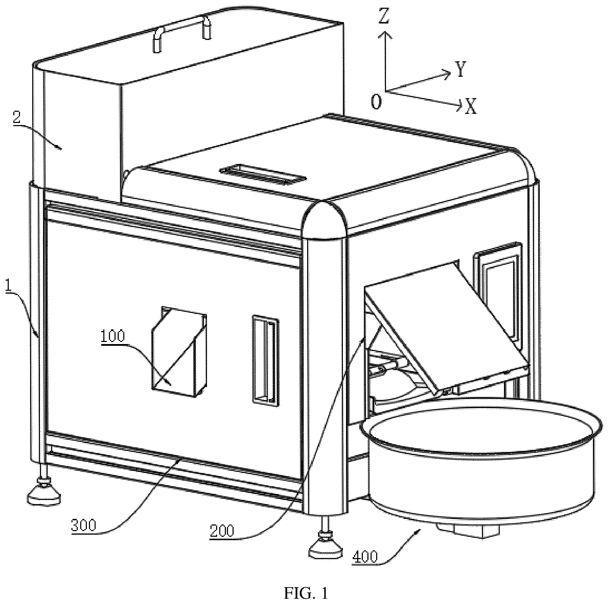

### See FIGs. 1-19 for reference.

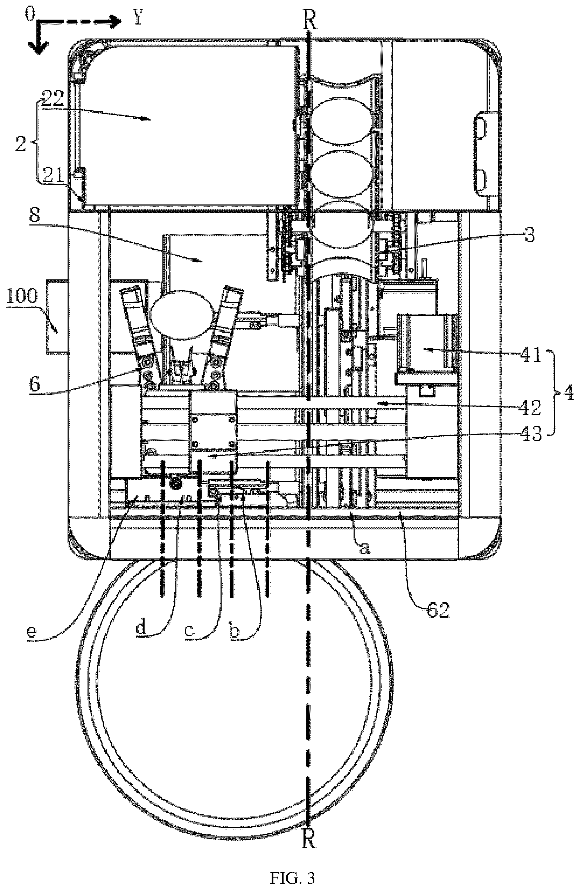

For clarity, "0-X", "0-Y" and "0-Z" are used for distinguishing the directions of movement of various parts and devices as shown in FIG. 1. In the figure, a cooking device 7 and an egg delivery device 3 are staggered by axis R-R as shown in FIG. 3.

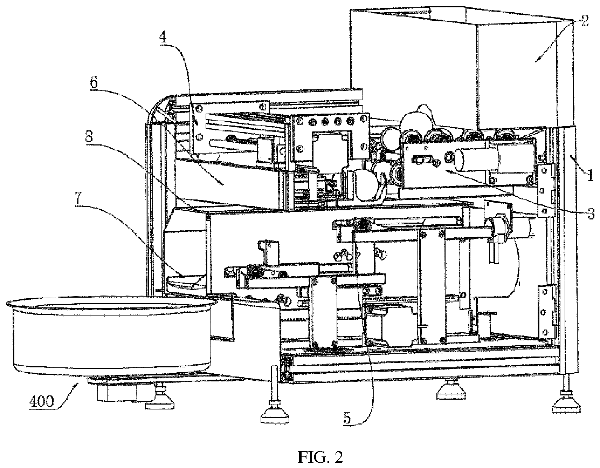

As shown in FIGs. 1-3, an example of the present disclosure provides an automatic egg frying machine, the automatic egg frying machine includes a machine frame 1, an egg placing device 2, an egg delivery device 3, a moving assembly 4, an egg shoveling device 5, an egg opening device 6, a cooking device 7 and a rotary receiving plate device 400. It should be noted that eggs may be placed on the egg opening device 6 manually or by other devices, and the egg delivery device 3 in this example is arranged to transfer the eggs to the egg opening device 6. The egg placing device 2 is arranged at one side above the machine frame 1, and the egg delivery device 3 is arranged at the position, close to a lower portion, of the egg placing device 2 in the machine frame 1. The egg opening device 6 is arranged at an upper portion inside the machine frame 1 and mutually cooperates with the cooking device 7. The moving assembly 4 driving the egg opening device 6 to move is arranged above the egg opening device 6, and the egg opening device 6 may be driven to move back and forth in a 0-Y direction. The cooking device 7 is arranged below the egg placing device 2, and the cooking device 7 and the egg delivery device 3 are staggered on an R-R axis, such that cooking fumes of the cooking device 7 do not directly adhere to and corrode parts of the egg delivery device 3, and the service life of the egg delivery device 3 is prolonged. As shown in FIG. 2, when the machine is used, the eggs are manually put into the egg placing device 2 in sequence, the eggs are delivered to the egg opening device 6 by means of the egg delivery device 3, and the egg opening device 6 receives the eggs in sequence, cracks the eggs from side surfaces and makes egg liquid flow into the cooking device 7. The fried eggs are heated and fried by means of the cooking device 7, the egg shoveling device 5 pushes the fried eggs out to be put into the rotary receiving plate device 400 of the egg frying machine, and finally, the fried eggs in the rotary receiving plate device 400 are taken away at regular intervals. Hands are freed in the cooking process, which greatly improves egg frying efficiency.

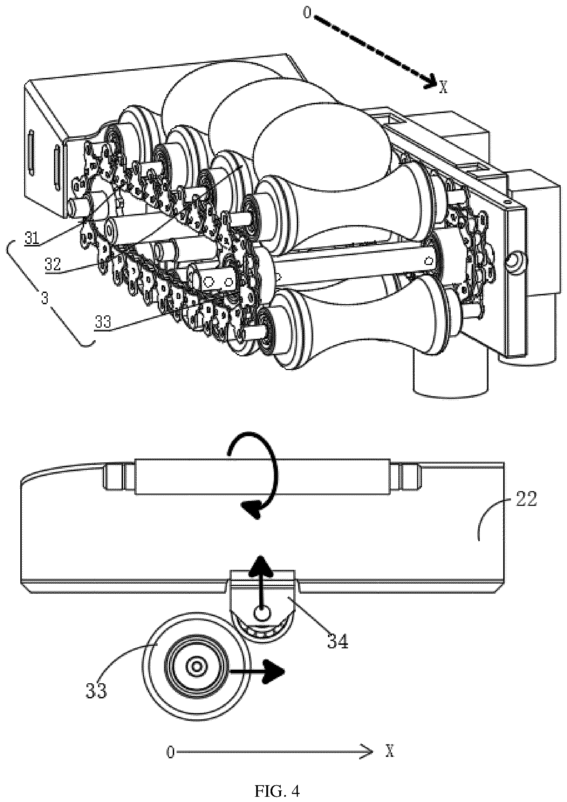

As shown in FIG. 3 and FIG. 4, the egg placing device 2 includes an egg placing port 21 and a swing plate 22, where an upper end of the swing plate 22 is fixed on the egg placing port 21 and is obliquely arranged, and a lower end of the swing plate 22 is provided with a swing plate trigger portion 34 for triggering the swing plate 22 to swing. The egg delivery device 3 is positioned on a lower end surface of the swing plate 22. The egg delivery device 3 includes a conveyor belt 31, an egg rotating rod 32 and a driving wheel 33, and the eggs may be put from the egg placing port 21 by means of manual holding or other devices. When the eggs move towards the egg opening device 6 on the egg rotating rod 32, the swing plate trigger portion 34 triggers the egg rotating rod 32, and the egg rotating rod 32 makes the swing plate trigger portion 34 be lifted, such that the swing plate 22 is lifted to swing, so as to adjust the eggs to fall down the position between two adjacent egg rotating rods 32 below, thereby automatically starting delivery of the eggs.

Specifically, several egg rotating rods 32 capable of rotating freely are fixed on the conveyor belt 31. When the egg rotating rods 32 move to a certain position along with the conveyor belt 31, the egg rotating rods may make contact with the driving wheel 33 and rotate, and the adjacent egg rotating rods 32 in contact with the eggs rotate synchronously. The egg rotating rods 32 are hollow rollers with narrow middle and wide two sides. The conveyor belt 31 is a chain conveyor belt 31. The driving wheel 33 is arranged in the hollow portion of the conveyor belt 31. When the egg rotating rods 32 fixed on the conveyor belt 31 move to a position corresponding to the driving wheel 33, a contact surface is formed between the egg rotating rods 32 and the driving wheel 33. Since the egg rotating rods 32 can rotate freely, the driving wheel 33 rotates to cause friction with the contact surface of the egg rotating rods 32, thereby driving the egg rotating rods 32 to rotate, and the eggs roll from the swing plate 22 to the position between two adjacent egg rotating rods 32. Rotation of the conveyor belt 31 drives the eggs and the egg rotating rods 32 to move synchronously. When the egg rotating rods 32 at the position corresponding to the driving wheel 33 are driven to rotate by the driving wheel 33, the eggs in contact with the egg rotating rods 32 are driven to rotate. Since the eggs are oval, that is, two ends are narrow and the middle is wide, the eggs can adapt to a gap between two adjacent egg rotating rods 32 when rolling, so as to adjust the posture orientation of all eggs on the egg rotating rods 32 to be consistent, such that the egg supporting portion 61 can better receive the eggs.

As shown in FIG. 3, the moving assembly 4 includes a driving member 41, a sliding rod 42 and a sliding block 43 slidably arranged on the sliding rod 42, and the egg opening device 6 and the sliding block 43 are fixedly arranged. When the driving member 41 is started, the sliding block 43 can drive the egg opening device 6 to reciprocate linearly along the sliding rod 42. The sliding rod 42 can also be of a sliding rail, a gear belt or other devices capable of supporting and moving the egg opening device 6, which is not repeated here.

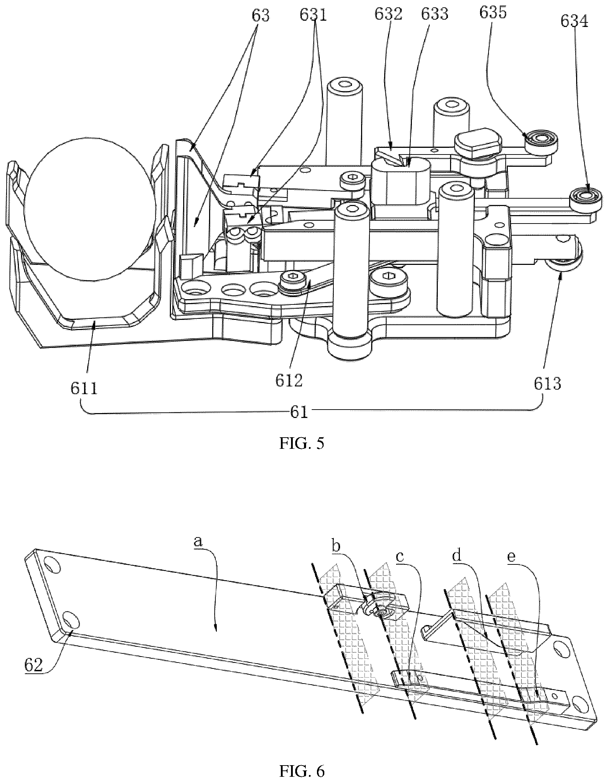

As shown in FIGs. 5-13, the egg opening device 6 includes an egg supporting portion 61, a trigger portion 62 and an egg knife 63, where the trigger portion 62 includes egg receiving position a, egg cracking position b, egg opening position c and shell dropping position e (various trigger points of the trigger portion 62 are marked out in FIG. 3 and FIG. 6, and intervals of the trigger points in FIG. 3 correspond to intervals of the trigger points in FIG.6). In an example of the present disclosure, when the egg supporting portion 61 is located at the egg receiving position a of the trigger portion 62, the eggs can be received. Then, when the egg supporting portion moves to the egg cracking position b, the egg knife 63 is triggered to crack eggshells from side surfaces. Then, the egg supporting portion moves to the egg opening position c, and the egg supporting portion 61 and the egg knife 63 are triggered to open together (optionally, the egg supporting portion moves to the egg cracking position b and the egg opening position c at the same time, the egg knife enters the eggs while cracking the eggs, and in this case, the egg supporting portion 61 is triggered to immediately break open and drive the egg knife 63 to open together). Small openings are made on the eggs to make egg white and egg liquid flow out of the eggshells. In this case, the egg supporting portion 61 can still support the eggs, and pauses for 3-5 seconds until the egg liquid is almost completely flowed out. The egg supporting portion 61 finally moves to the shell dropping position e, the egg supporting portion 61 is triggered to continue to open until the eggshells cannot be supported, such that the eggshells fall to complete the shell dropping action, and the egg opening device 6 completes the actions of egg receiving, egg cracking, egg opening and shell dropping in one direction by means of one moving device.

As shown in FIGs. 5-7, the egg supporting portion 61 includes an egg holder 611, and spring IV 65 is arranged between two portions of the egg holder 611. A double-rod push rod 612 for driving the egg holder 611 to open or close is fixedly arranged on one side of the egg holder 611, and roller I 613 is arranged on one side of the double-rod push rod 612. The egg knife 63 is arranged above the egg holder 61, one side of the egg knife 63 is provided with L-shaped supports 631, and spring III 64 is arranged between the two L-shaped supports 631. One side of the L-shaped support 631 is provided with a clamping groove 633, and one side of the clamping groove 633 is provided with roller II 634. One side of the clamping groove 633 is provided with a buckle 632 corresponding to the clamping groove 633, and one side of the buckle 632 is provided with roller III 635. The double-rod push rod 612 is fixedly provided with two inclined plane convex blocks 614, and lower end surfaces of the L-shaped supports 631 are provided with inclined plane grooves (not shown in the figure) corresponding to the inclined plane convex blocks 614.

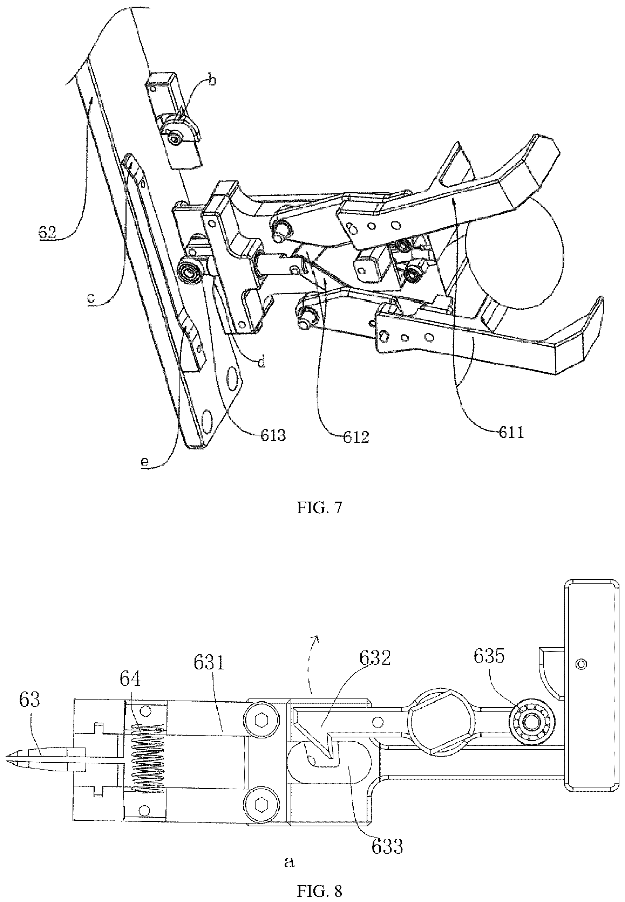

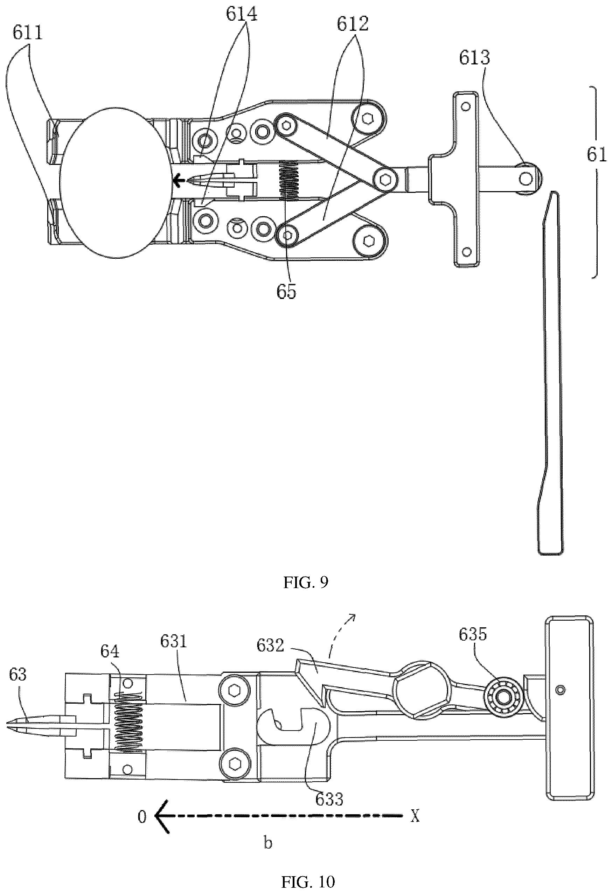

Specifically, as shown in FIG. 8 and FIG. 9, in this case, the egg supporting portion 61 and the egg knife 63 are positioned at the egg receiving position a of the trigger portion 62 to receive the eggs transferred by the egg delivery device 3.

As shown in FIG. 9 and FIG. 10, when the egg supporting portion 61 and the egg knife 63 move towards and pass by the egg cracking position b of the trigger portion 62, the roller III 635 rolls over the egg cracking position b, the buckle 632 rotates outwards and is released from the clamping groove 633, such that the L-shaped support 631 drives the egg knife 63 to move towards the egg direction and crack the eggshells from side surfaces of the eggs. The inclined plane groove (not shown in the figure) is provided in the L-shaped support 631. The inclined plane groove (not shown in the figure) matches the inclined plane convex block 614 on the double-rod push rod 612. When the egg knife 63 moves towards the direction of the eggs for egg cracking, the inclined plane groove (not shown in the figure) is connected to the inclined plane convex block 614 on the double-rod push rod 612 in a clamped manner.

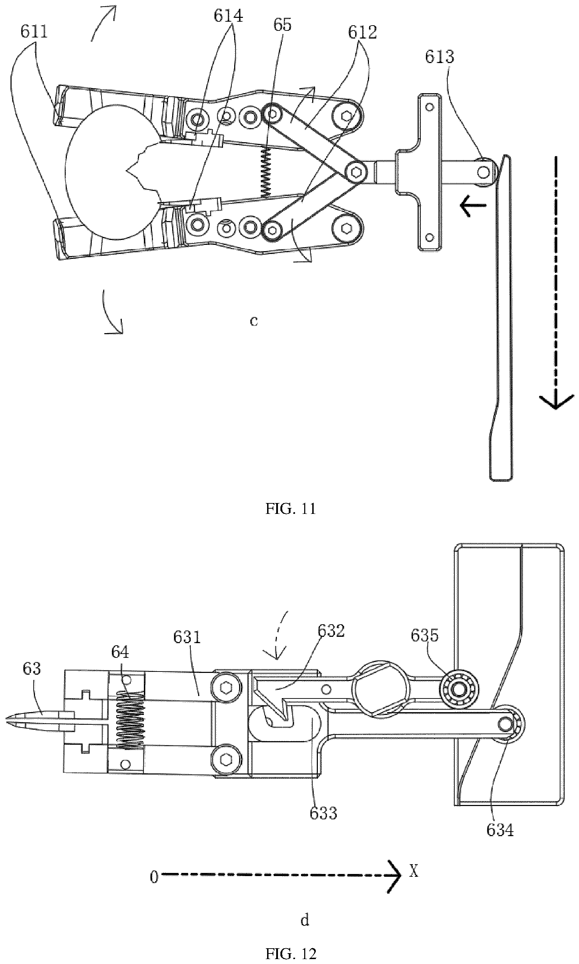

As shown in FIG. 11, the egg supporting portion 61 and the egg knife 63 continue to move to the egg opening position c of the trigger portion 62, and the roller I 613 rolls over the egg opening position c. In this case, the double-rod push rod 612 slightly open along two sides of the 0-Y direction. Since the inclined plane groove (not shown in the figure) is attached to the inclined plane convex block 614 in a clamped manner, the double-rod push rod 612 will drive the egg holder 611 and the egg knife 63 to slightly open together, such that the eggshells are driven to slightly open to make the egg liquid flow out and fall into the cooking device 7 directly below.

As shown in FIG. 12, in order to avoid the situation that the egg knife 63 possibly hinders the operation of shell dropping, the trigger portion 62 is provided with knife resetting position d for triggering the egg knife 63 to be reset. When the roller II 634 rolls over from the knife resetting position d, the egg knife 63 is driven to move in the direction opposite the eggs. Meanwhile, the spring III 64 makes the L-shaped support 631 close to drive the egg knife 63 to close, such that the buckle 632 slides over from an arc-shaped side surface of the clamping groove 633 and is clamped into the clamping groove 633, the egg knife 63 is reset, blocking by the egg knife 63 to the eggshells is reduced, and shell dropping of the egg holder 611 is facilitated.

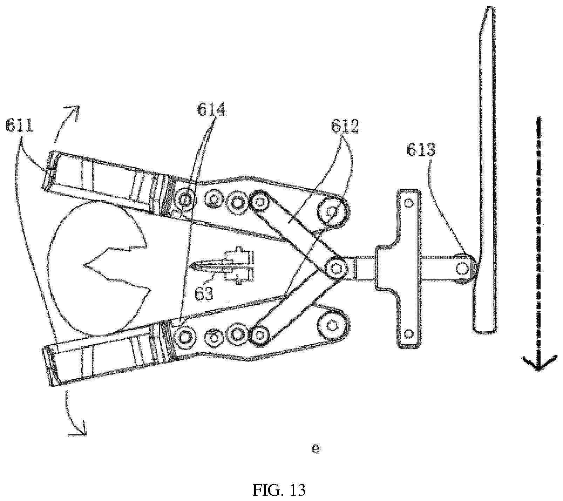

As shown in FIG. 13, the egg supporting portion 61 and the egg knife 63 continue to move to the shell dropping position e, and the arc of the shell dropping position e is much larger than that of the egg opening position d. In this case, the double-rod push rod 612 continues to open along the two sides of the 0-Y direction to drive the egg holder 611 and the egg knife 63 to open together until the egg holder 611 cannot support the eggshells, and the eggshells drop naturally due to gravity, thereby completing the shell dropping action. When the egg holder 611 is reset, the egg holder 611 closes by means of an elastic force of spring IV 65.

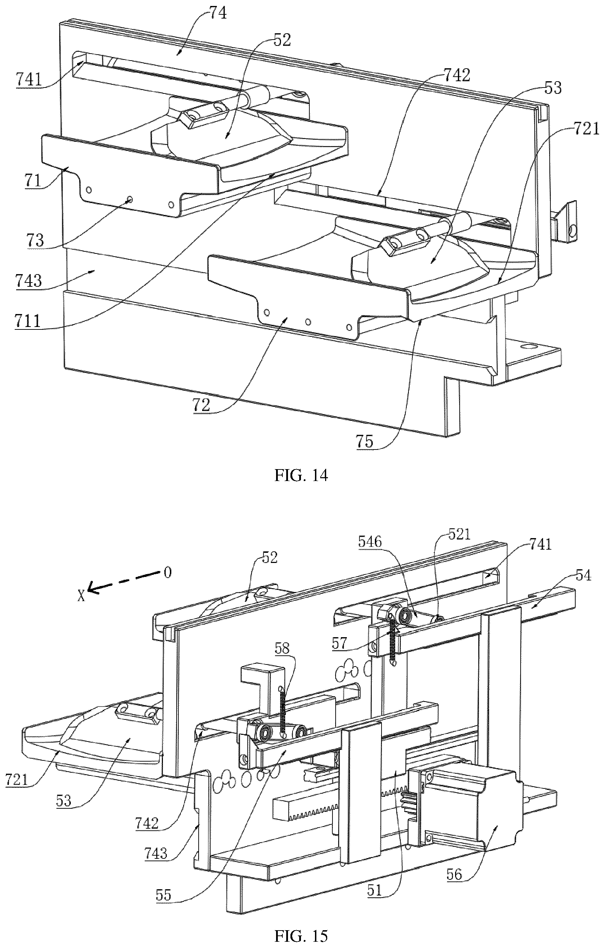

As shown in FIG. 14 and FIG. 15, the cooking device 7 includes a frying pan and a fixing plate 74, where the fixing plate 74 is positioned below the egg receiving position a of the trigger portion 62 (position of the fixing plate 74 as represented by the R-R line in FIG. 3). The frying pan includes an upper frying pan 71 and a lower frying pan 72, where the upper frying pan 71 and the lower frying pan 72 are fixedly arranged at one side of the fixing plate 74, one side of the upper frying pan 71 is provided with outlet I 711, one side of the lower frying pan 72 is provided with outlet II 721, and the outlet I 711 of the upper frying pan 71 is arranged right above the lower frying pan 72. Heating pipes 73 are arranged at bottoms of the upper frying pan 71 and the lower frying pan 72. One side of the fixing plate 74 is provided with an egg shoveling device 5, and the egg shoveling device 5 includes a moving block 51 reciprocating in a 0-X direction, a driving air cylinder 56, an upper spatula 52 and a lower spatula 53. The fixing plate 74 is provided with strip hole I 741 and strip hole II 742, where one end of the upper spatula 52 passes through the strip hole I 741, one end of the lower spatula 53 passes through the strip hole II 742, and the upper spatula 52 and the lower spatula 53 are fixed on the moving block 51 at the same time. The upper spatula 52 is placed in the upper frying pan 71, and the lower spatula 53 is placed in the lower frying pan 72. When the driving air cylinder 56 is started to make the moving block 51 reciprocate in the 0-X direction, the upper spatula 52 and the lower spatula 53 are driven to move together.

Specifically, the strip hole I 741 and the strip hole II 742 are in slope shapes inclined to the cooking device 7, which can reduce the cooking fumes drifting into the egg shoveling device 5 in the cooking device 7, reduce corrosion caused by the cooking fumes, effectively reduce cleaning times, and prolong the service life of the egg shoveling device 5.

An oil pumping portion (not shown in the figure) may also be arranged on one side of the egg shoveling device 5 for adding oil to the upper frying pan 71, and the oil pumping portion (not shown in the figure) may pump a fixed amount of oil into the upper frying pan 71 each time when eggs are fried, thereby achieving automatic oil addition to the upper frying pan 71.

As shown in FIG. 15, since the lower spatula 53 will push back the fried eggs placed in the lower frying pan 72 during a resetting process, resulting in failure of egg frying, the lower spatula 53 may usually be set to be driven to be lifted by means of an electric motor to provide avoidance for the fried eggs in the prior art, as long as the lower spatula 53 can be lifted for avoidance, while in the example of the present disclosure, one side of the upper spatula 52 is provided with lifting device I 54, and one side of the lower spatula 53 is provided with lifting device II 55. The lifting device I 54 has the same structure as the lifting device II 55. Since the upper spatula 52 and the lower spatula 53 are synchronously lifted for avoidance to achieve synchronous egg pushing and resetting, the action principle of the upper spatula 52 will be described in detail, and the action principle of the lower spatula 53 is not repeated here.

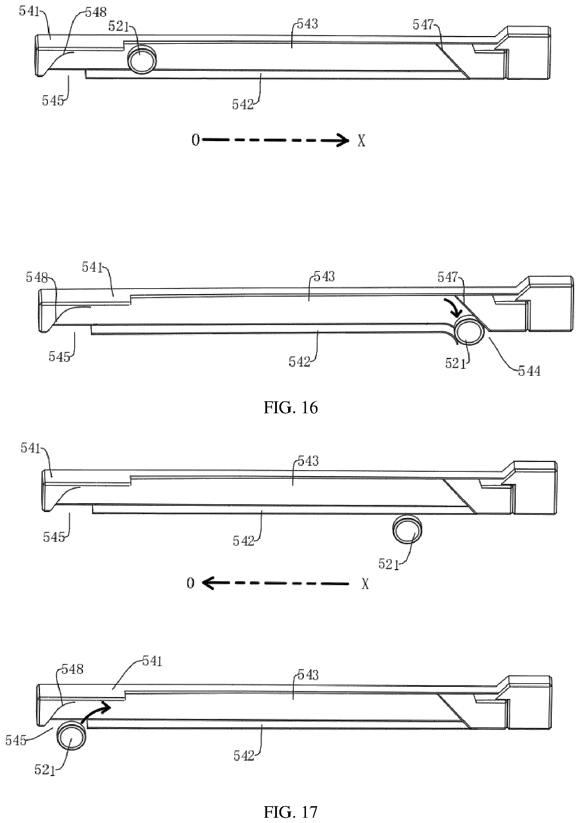

As shown in FIG. 16, the lifting device I 54 includes a position-avoiding plate 541, a swing arm 546 and an elastic sheet 542, where the position-avoiding plate 541 is provided with a position-avoiding groove 543, two sides of the position-avoiding groove 543 each are provided with a guide surface 548, a position-avoiding inclined plane 547 and notch II 545, notch I 544 is capable of being formed between the position-avoiding inclined plane 547 and the elastic sheet 542, and one end of the swing arm 546 is provided with roller IV 521. It needs to be noted that the elastic sheet 542 is slightly elastic and bendable. When the elastic sheet is stationary, the roller IV 521 is located at an upper end of the guide surface 548 of the notch II 545, and a certain height is kept from a lower end surface of the upper spatula 52 to an egg frying surface of the lower frying pan 72, so as to ensure that the upper spatula 52 does not make contact with the egg frying surface at a high temperature during waiting when the lower frying pan 72 performs egg frying, thereby greatly prolonging the service life of the upper spatula 52. A track is formed between the position-avoiding groove 543 and the elastic sheet 542, and the driving air cylinder 56 is started to drive the moving block 51 to drive the upper spatula 52 to move in the 0->X direction, while the roller IV 521 moves in the track. During this process, a pulling force of the spring II 58 makes the lower end surface of the upper spatula 52 more closely in contact with the arc-shaped egg frying surface of the upper frying pan 71 and push the eggs. When the roller IV 521 makes contact with the position-avoiding inclined plane 547 and rolls along the position-avoiding inclined plane 547, the roller IV 521 presses the elastic sheet 542 to form the notch I 544. In this case, the upper spatula 52 rotates counterclockwise with the position-avoiding inclined plane 547 as a rotation point to lift the upper spatula 52, such that the lower end surface of the upper spatula 52 is lifted to be away from the egg frying surface of the lower frying pan 72, thereby completing an egg shoveling action and achieving complete egg pushing.

As shown in FIG. 17, when the driving air cylinder 56 is started to drive the moving block 51 to drive the upper spatula 52 to move in the X->0 direction, in this case, when the roller IV 521 rolls to just make contact with the elastic sheet 542, upward deformation of the elastic sheet 542 is blocked by the position-avoiding inclined plane 547, such that the roller IV 521 can be prevented from rolling back into the position-avoiding groove 543. The roller IV 521 keeps a height distance between the lower end surface of the upper spatula 52 and the egg frying surface of the upper frying pan 71 during a rolling process at the lower end surface of the elastic sheet 542, thereby effectively preventing the eggs naturally falling from the upper frying pan 71 from being pushed back during a resetting process, resulting in failure of egg frying. When the roller IV 521 is attached to the lower end surface of the elastic sheet 542 and rolls to the position of the notch II 545, the height of the lower end surface of the upper spatula 52 is maintained. For the roller IV 521, under the action of a pulling force of the spring II 57, the roller IV 521 rolls from the lower end surface of the elastic sheet 542 to an upper end of the guide surface 548 by means of the notch II 545. In this case, the roller IV 521 is not in contact with an upper end surface of the elastic sheet 542, so as to achieve resetting of the lower spatula 52 and facilitate the next egg pushing.

Specifically, after the eggs are fried in the upper frying pan 71, the eggs are pushed to the outlet I 711 by the upper spatula 52, and directly fall into the lower frying pan 72 below and are turned over. Since the upper spatula 52 and the lower spatula 53 move synchronously, there is no need worry that the fried eggs will fall on the lower spatula 53 when falling. Then, the upper spatula 52 and the lower spatula 53 are reset, oil is added, eggs are cracked above the upper frying pan 71, and eggs in the upper frying pan 71 and the lower frying pan 72 are fried at the same time, such that the speed of frying the eggs is improved while ensuring the ripeness, taste and beauty of the eggs, and time for frying the eggs is saved.

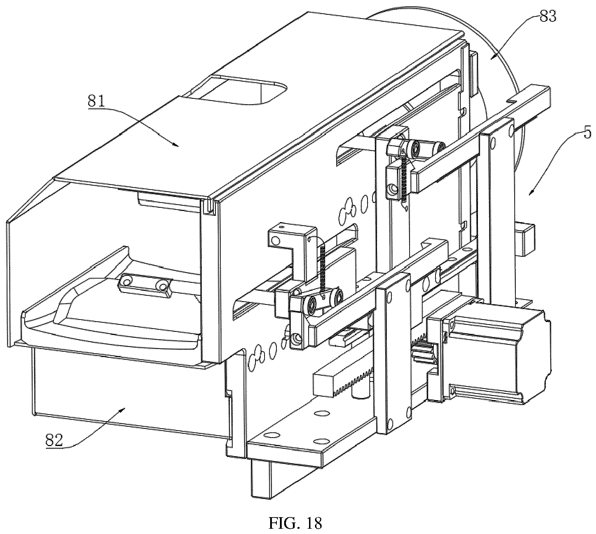

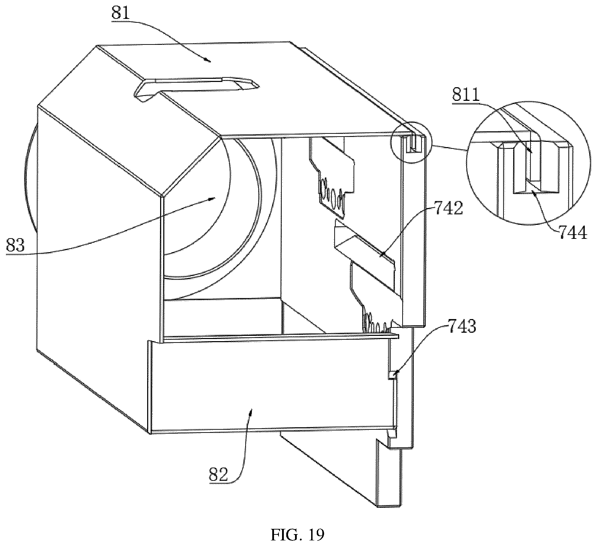

As shown in FIG. 18 and FIG. 19, an oil blocking portion 8 is arranged above the cooking device 7, the oil blocking portion 8 includes a baffle plate 81, an oil receiving groove 82 and a range hood 83, the fixing plate 74 is provided with a chute 744 and an oil draining groove 743, and one end of the baffle plate 81 is provided with a protrusion 811. It should be noted that the baffle plate 81 is fixedly connected to the oil receiving groove 82, the baffle plate 81 can block cooking fumes generated when the upper frying pan 71 and the lower frying pan 72 fry the eggs. The oil receiving groove 82 corresponds to the oil draining groove 743, such that some oil droplets remaining in the fixing plate 74 can flow into the oil receiving groove 82 along the fixing plate 74, and moreover, oil droplets dripping from an oil condensing portion 75 can also be received, so as to avoid the situation that the oil droplets remain below the machine frame 1 and difficult cleaning is caused. The range hood 83 is used for discharging the cooking fumes from the cooking device 7. The protrusion 811 corresponds to the chute 744, and some parts of the rotary receiving plate device 400 are pulled out,
such that the baffle plate 81 and the oil receiving groove 82 can be completely pulled out from the machine frame 1, and cleaning can be directly carried out outside. Therefore, operation is simple, convenient and fast, and cleaning is time-saving and labor-saving.

As shown in FIG. 1, the machine frame 1 is further provided with a shell receiving chute 100 for receiving the eggshells, an egg outlet 200, a cleaning port 300 formed after a door plate of the shell receiving chute 100 is opened, and a rotary receiving plate device 400 for receiving fried eggs naturally falling from the lower frying pan 72. It should be noted that the shell receiving chute 100 is located right below the shell dropping position e, the eggshells on the egg opening device 6 can fall onto the shell receiving chute 100, a shell discharging port of the shell receiving chute 100 is located outside the machine frame 1, and a garbage can or garbage bag can be placed below the shell discharging port of the shell receiving chute 100, which is specially used for containing the eggshells. The frying condition of the fried eggs can be observed by means of the egg outlet 200, and the fried eggs can be pushed out from the machine frame 1 by means of the egg outlet 200. The rotary receiving plate device 400 is arranged below the egg outlet 200 in a clamped manner and is used for receiving the fried eggs dropped from the lower frying pan 72. The rotary receiving plate device 400 can be arranged to rotate at a certain angle to achieve egg receiving in a circular array, so as to avoid frequent egg receiving by means of manual operation, increase the number of fried eggs received, and prolong time intervals for manual egg receiving. After the oil blocking portion 8 is pulled out, the door plate at the shell receiving chute 100 is opened to form the cleaning port 300, and when the oil blocking portion 8 is pulled out from the egg outlet 200, the cooking device 7 can be reached directly from the cleaning port for cleaning the space portion where the cooking device 7 is located, and operation is simple, convenient and fast.

The working process of the automatic egg frying machine in this example is as follows:
A worker feeds eggs from the egg placing port 21, the eggs slowly roll onto the egg rotating rods 32 of the egg delivery device 3 from the inclined swing plate 22, and then the eggs and the egg rotating rods 32 are driven to move together by means of the rotation of the conveyor belt 31 of the egg delivery device 3. When the eggs move to the position right above the egg opening device 6 (at this time, the egg opening device 6 is located at the egg receiving position a of the trigger portion 62), the eggs continue to move and fall onto the egg holder 611 of the egg supporting portion 61, the driving member 41 in the moving assembly 4 is started, the sliding block 43 drives the egg knife 63 and the egg supporting portion 61 to move to the egg cracking position b in the Y->0 direction on the sliding rod 42, and oil is added into the upper frying pan 71 at the same time. In this case, the roller III 635 rolls over the egg cracking position b to separate the buckle 632 from the clamping groove 633, such that the L-shaped support drives the egg knife 63 to move towards the egg direction and crack eggshells from the side surfaces of the eggs. The egg knife 63 and the egg supporting portion 61 continue to move, the roller I 613 rolls over the egg opening position c, the double-rod push rod 612 drives the egg knife 63 to open the eggs on the side surfaces of the eggs, egg liquid flows into the upper frying pan 71 by means of a small hole left in the baffle plate 81, and then the egg knife 63 and the egg supporting portion 61 continue to move, the roller II 634 rolls over from the knife resetting position d, such that the buckle 632 slides over from the arc-shaped side surface of the clamping groove 633 and is clamped into the clamping groove 633. The egg knife 63 and the egg supporting portion 61 move to the shell dropping position e, the double-rod push rod continues to open to drive the egg holder 611 to open, such that the eggshells naturally fall into the shell receiving chute 100. In this case, the upper frying pan 71 fries one sides of fried eggs well. The egg shoveling device 5 is started, such that the moving block 51 drives the upper spatula 52 and the lower spatula 53 to move in the 0->X direction, and the fried eggs naturally fall from the outlet I 711 and turn over to the lower frying pan 72. Then, the upper spatula 52 and the lower spatula 53 are reset, and when the moving block 51 continues to move in the 0->X direction, the upper spatula 52 is driven to push the fried eggs in the upper frying pan 71 to fall from the outlet I 711, and moreover, the lower spatula 53 pushes the fried eggs in the lower frying pan 72 to fall from the outlet II 721 to the rotary receiving plate device 400, and the above actions are repeated, such that the fried eggs can be continuously produced and received for sale.

For those skilled in the art, it is apparent that the present disclosure is not limited to the details of the above-mentioned exemplary examples, and the present disclosure may be implemented in other specific forms without departing from the spirit or basic features of the present disclosure.

Therefore, no matter from which point of view, the examples should all be regarded as exemplary and non-limiting. The scope of the present disclosure is defined by the appended claims rather than the above-mentioned description, and therefore it is intended that all changes which fall within the meaning and scope of equivalency of the claims are embraced in the present disclosure. Any reference numeral in the claims should not be construed as limiting the related claims.

In addition, it should be understood that although the present description is described according to the embodiments, not each embodiment only contains an independent technical solution, and the specification manner of the description is only for clarity. Those skilled in the art should take the description as a whole, and the technical solutions in the examples can also be appropriately combined to form other embodiments that can be understood by those skilled in the art.

## Claims

1. An automatic egg frying machine, comprising:
a machine frame (1), wherein an egg opening device (6) and a cooking device (7) are arranged in the machine frame (1);
the cooking device (7) at least comprising a frying pan; and
the egg opening device (6) comprising an egg supporting portion (61), a trigger portion (62) and an egg knife (63), wherein
the trigger portion (62) comprises egg receiving position a, egg cracking position b, egg opening position c and shell dropping position e,
one side of the egg opening device (6) is provided with a moving device, and the egg opening device (6) completes the actions of egg receiving, egg cracking from a side surface, egg opening and shell dropping in one direction by means of the moving device.

2. The automatic egg frying machine according to claim 1, wherein the egg supporting portion (61) comprises an egg holder (611), one side of the egg holder (611) is fixedly provided with a double-rod push rod (612) for driving the egg holder (611) to open or close, one side of the double-rod push rod (612) is provided with roller I (613), and spring IV (65) is arranged between two portions of the egg holder (611).

3. The automatic egg frying machine according to claim 1, wherein the egg knife (63) is arranged above the egg supporting portion (61), one end of the egg knife (63) is fixedly provided with L-shaped supports (631), spring III (64) is arranged between the two L-shaped supports (631), one end of the L-shaped support (631) is fixedly provided with a clamping groove (633), one end of the clamping groove (633) is fixedly provided with roller II (634), one side of the clamping groove (633) is provided with a buckle (632) corresponding to the clamping groove (633), one end of the buckle (632) is fixedly provided with roller III (635), and the buckle (632) is separated from the clamping groove (633), such that the L-shaped support (631) drives the egg knife (63) to move towards eggs and crack shells from side surfaces.

4. The automatic egg frying machine according to claim 2, wherein two inclined plane convex blocks (614) are fixedly arranged on the double-rod push rod (612).

5. The automatic egg frying machine according to claim 1, wherein knife resetting position d for triggering the egg knife (63) to be reset is arranged above the shell dropping position e of the trigger portion (62).

6. The automatic egg frying machine according to claim 1, wherein the moving device is of a moving assembly (4), the moving assembly (4) comprises a driving member (41), a sliding rod (42) and a sliding block (43) slidably arranged on the sliding rod (42), and the egg opening device (6) and the sliding block (43) are fixedly arranged.

7. The automatic egg frying machine according to claim 1, wherein an egg placing device (2) is arranged on one side above the machine frame (1), the egg placing device (2) comprises an egg placing port (21) and an inclined swing plate (22), and a swing plate trigger portion (34) for triggering the swing plate (22) to swing is arranged at a lower end of the swing plate (22).

8. The automatic egg frying machine according to claim 7, wherein an egg delivery device (3) is arranged in the machine frame (1), the egg delivery device (3) is positioned on a lower end surface of the swing plate (22), and the egg delivery device (3) comprises a conveyor belt (31), a plurality of freely rotating egg rotating rods (32) and a driving wheel (33).

9. The automatic egg frying machine according to claim 7, wherein the cooking device (7) is arranged below the egg placing device (2), the cooking device (7) comprises a frying pan and a fixing plate (74), the frying pan comprises an upper fry pan (71) and a lower frying pan (72), one side of the upper frying pan (71) is provided with outlet I (711), one side of the lower frying pan (72) is provided with outlet II (721), the outlet I (711) of the upper frying pan (71) is arranged right above the lower frying pan (72), and heating pipes (73) for heating eggs are arranged below the upper frying pan (71) and the lower fry pan (72).

10. The automatic egg frying machine according to claim 9, wherein an oil blocking portion (8) is arranged above the cooking device (7), the oil blocking portion (8) comprises a baffle plate (81), an oil receiving groove (82) and a range hood (83), a chute (744) and an oil draining groove (743) are arranged on the fixing plate (74), and a protrusion (811) is arranged at one end of the baffle plate (81).

11. The automatic egg frying machine according to claim 10, wherein the other side of the fixing plate (74) is provided with an egg shoveling device (5), the egg shoveling device (5) comprises a moving block (51), a driving air cylinder (56), an upper spatula (52) and a lower spatula (53), the fixing plate (74) is provided with strip hole I (741) and strip hole II (742), one side of the upper spatula (52) is provided with lifting device I (54), one side of the lower spatula (53) is provided with lifting device II (55), the upper spatula (52) is arranged in the upper frying pan (71), and the lower spatula (53) is arranged in the lower frying pan (72).

12. The automatic egg frying machine according to claim 11, wherein the lifting device I (54) has the same structure as the lifting device II (55), the lifting device I (54) comprises a position-avoiding plate (541), a swing arm (546) and an elastic sheet (542), the position-avoiding plate (541) is provided with a position-avoiding groove (543), two sides of the position-avoiding groove (543) each are provided with a guide surface (548), a position-avoiding inclined plane (547) and notch II (545), notch I (544) is capable of being formed between the position-avoiding inclined plane (547) and the elastic sheet (542), and roller IV (521) is arranged at one end of the swing arm (546).

13. The automatic egg frying machine according to claim 12, wherein one side of the lifting device I (54) is provided with spring I (57) fixedly connected to the moving block (51), and one side of the lifting device II (55) is provided with spring II (58) fixedly connected to the moving block (51).

14. The automatic egg frying machine according to claim 1, wherein the machine frame (1) is further provided with a shell receiving chute (100) positioned right below the shell dropping position e and capable of receiving eggshells, an egg outlet (200), a cleaning port (300) formed by opening a door plate of the shell receiving chute (100), and a rotary receiving plate device (400) for receiving fried eggs naturally falling from a lower frying pan (72).
